# EUROPÄISCHE PATENTSCHRIFT

(11) **EP 3 581 443 B1**
(45) Veröffentlichungstag und Bekanntmachung des Hinweises auf die Patenterteilung: **13.07.2022**
(21) Anmeldenummer: 19169777.0
(22) Anmeldetag: 17.04.2019
(51) Int. Cl.: B60R 25/40, E05B 81/82, G07C 9/00

(54) **KOMMUNIKATIONSVORRICHTUNG FÜR EIN FAHRZEUG ZUR DURCHFÜHRUNG EINER KONTAKTLOSEN DATENÜBERTRAGUNG**
COMMUNICATION DEVICE FOR A VEHICLE FOR CARRYING OUT A CONTACTLESS DATA TRANSMISSION
DISPOSITIF DE COMMUNICATION POUR UN VÉHICULE POUR EFFECTUER UNE TRANSMISSION DE DONNÉES SANS CONTACT

(30) Priorität: 20.04.2018 DE 102018109506
(43) Veröffentlichungstag der Anmeldung: 18.12.2019
(73) Patentinhaber: Huf Hülsbeck & Fürst GmbH & Co. KG, 42551 Velbert (DE)
(72) Erfinder: Peschl, Andreas, 42555 Velbert (DE); Bextermöller, Hubert, 45468 Mülheim an der Ruhr (DE)
(74) Vertreter: Bals & Vogel Patentanwälte PartGmbB

(56) Entgegenhaltungen:
- EP-A2- 1 564 689
- WO-A1-2019/030334
- DE-A1-102006 002 119
- DE-A1-102014 104 032
- DE-A9-102004 007 721
- DE-U1-202016 105 621
- US-A1- 2013 166 144

## Beschreibung

Die vorliegende Erfindung betrifft eine Kommunikationsvorrichtung für ein Fahrzeug zur Durchführung einer kontaktlosen Datenübertragung. Ferner bezieht sich die Erfindung auf ein System mit einer solchen Kommunikationsvorrichtung sowie auf ein Verfahren zum energiesparenden Betrieb wenigstens einer Komponente eines Fahrzeugs.

Es ist aus dem Stand der Technik bekannt, dass aktiv pollende Systeme bei Fahrzeugen eingesetzt werden, z. B. als Kommunikationssysteme. Solche Systeme senden regelmäßig ein Kommunikationssignal aus, um einen Teilnehmer in Kommunikationsreichweite feststellen zu können.

Allerdings hat sich das Problem herausgestellt, dass der Stromverbrauch bei solchen Systemen für einen längeren Fahrzeugstillstand zu hoch sein kann. Bspw. nach einem längeren Transport des Fahrzeuges kann daher die Fahrzeugbatterie keinen ausreichenden Ladezustand aufweisen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Möglichkeit vorzuschlagen, eine Elektronik des Fahrzeuges im Hinblick auf einen längeren Transport des Fahrzeuges zu nutzen.

Die voranstehende Aufgabe wird gelöst durch eine Kommunikationsvorrichtung mit den Merkmalen des unabhängigen Vorrichtungsanspruchs, ein System mit den Merkmalen des unabhängigen Systemanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Kommunikationsvorrichtung beschrieben sind, selbstverständlich auch im Zusammenhang mit dem erfindungsgemäßen System sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Kommunikationsvorrichtung für ein Fahrzeug zur Durchführung einer kontaktlosen Energie- und/oder Datenübertragung zwischen einer (fahrzeuginternen) Fahrzeugelektronik und einem fahrzeugexternen Gerät. Hierbei ist insbesondere vorgesehen, dass die Kommunikationsvorrichtung dazu ausgeführt ist, eine fahrzeuginterne (elektrische) Energieversorgung der Kommunikationsvorrichtung mittels einer fahrzeugexternen (elektrische) Energieversorgung an der Kommunikationsvorrichtung zu aktivieren. In anderen Worten kann an der Kommunikationsvorrichtung, z. B. durch eine induktive Übertragung und/oder Nahfeld-Übertragung, die fahrzeugexterne Energieversorgung hergestellt werden, um darüber die fahrzeuginterne Energieversorgung zu aktivieren. Das Aktivieren bezieht sich z. B. auf ein Umschalten von einem passiven Modus (Passivmodus oder auch passiver Tiefschlafmodus) auf einen aktiven Modus (Aktivmodus) der Kommunikationsvorrichtung, wobei bei letzterem die fahrzeuginterne Energieversorgung hergestellt sein kann. Dies hat den Vorteil, dass der Energieverbrauch im Tiefschlafmodus signifikant reduziert oder sogar vollständig vermieden werden kann, und dennoch zuverlässig und komfortabel die interne Energieversorgung des Fahrzeuges wieder aktiviert werden kann.

Das vorherige Deaktivieren der fahrzeuginternen Energieversorgung, also der Wechsel vom aktiven Modus in den Tiefschlafmodus, kann z. B. durch einen Kommunikationsbefehl über die kontaktlose Datenübertragung erfolgt sein. Anschließend kann es möglich sein, dass ein Betrieb der Kommunikationsvorrichtung ohne Herstellung der fahrzeugexternen Energieversorgung im passiven Modus nicht mehr möglich ist. Erst und/oder ausschließlich das beschriebene Aktivieren der fahrzeuginternen Energieversorgung mittels der fahrzeugexternen Energieversorgung kann dazu führen, dass die Kommunikationsvorrichtung auch wieder fahrzeugintern mit Energie versorgt werden kann. Nach dem vollständigen Aktivieren (also dem Beenden eines automatisierten Aktivierungsvorgangs) kann daher die fahrzeugexterne Energieversorgung wieder deaktiviert werden, und dennoch die Kommunikationsvorrichtung weiterhin im Aktivmodus betrieben werden. Die fahrzeugexterne Energieversorgung wird also nicht mehr benötigt, und stattdessen kann die Kommunikationsvorrichtung sogar selbst eine Energieversorgung für das fahrzeugexterne (extern in Bezug auf das Fahrzeug) Gerät kontaktlos (z. B. mittels Induktion) bereitstellen.

Die fahrzeuginterne Energieversorgung kann somit bspw. eine Energieversorgung durch eine Energiequelle, wie einen Akkumulator, des Fahrzeuges sein. Die fahrzeugexterne Energieversorgung ist z. B. eine Energieversorgung durch eine Energiequelle, z. B. des fahrzeugexternen Geräts, welche sich entsprechend außerhalb des Fahrzeuges befindet. Die kontaktlose Datenübertragung ist z. B. eine Nahfeld-Übertragung (insbesondere NFC), sodass die Kommunikationsvorrichtung als eine Nahfeld-Kommunikationsvorrichtung (insbesondere NFC-Schnittstelle) ausgeführt sein kann.

Das Fahrzeug ist z. B. als ein Kraftfahrzeug und/oder Personenkraftfahrzeug und/oder Elektrofahrzeug und/oder Hybridfahrzeug ausgebildet. Das Fahrzeug weist eine fahrzeugseitige Energiequelle als Energiespeicher auf, um elektrische Komponenten des Fahrzeuges über ein Bordnetz mit elektrischer Energie zu versorgen. Entsprechend kann sich Energieversorgung auf eine Versorgung mit elektrischer Energie, z. B. Strom und/oder Spannung, beziehen. Ferner kann das Fahrzeug wenigstens einen Außentürgriff aufweisen, in welchem bspw. auch die erfindungsgemäße Kommunikationsvorrichtung angeordnet sein kann.

Des Weiteren kann vorgesehen sein, dass ein Kommunikationselement zur kontaktlosen Kopplung mit dem fahrzeugexternen Gerät vorgesehen ist, um in einem Tiefschlafmodus, insbesondere passiven Tiefschlafmodus, der Kommunikationsvorrichtung die fahrzeugexterne Energieversorgung über die Kopplung an der Kommunikationsvorrichtung bereitzustellen. Das Kommunikationselement ist z. B. als eine Spule, vorzugsweise Nahfeld-Übertragungsspule, ausgebildet, um eine induktive Kopplung bereitzustellen. Das Kommunikationselement kann dabei sowohl zur Datenübertragung (z. B. mittels NFC) als auch zur Energieübertragung dienen. Bevorzugt ist das Kommunikationselement an einer Leiterplatte befestigt und leitend mit einer Auswertevorrichtung zur Durchführung der Nahfeld-Übertragung, z. B. einem Mikrocontroller oder dergleichen, verbunden. Dies hat den Vorteil, dass eine kostengünstige, platzsparende und einfache Ausbildung der Kommunikationsvorrichtung genutzt werden kann, um die Aktivierung der fahrzeuginternen Energieversorgung durchzuführen.

Es kann im Rahmen der Erfindung vorgesehen sein, dass die Kommunikationsvorrichtung dazu ausgeführt ist:
- in einem Aktivmodus mit einer fahrzeugseitigen (fahrzeuginternen) Energiequelle zur fahrzeuginternen Energieversorgung elektrisch verbindbar zu sein, um die Datenübertragung durchzuführen, und/oder
- in einem Tiefschlafmodus mit einem Kommunikationselement der Kommunikationsvorrichtung verbunden zu sein, um eine Überführung in den Aktivmodus zu initiieren, sobald die fahrzeugexterne Energieversorgung bereitgestellt ist.
Hierbei kann das Kommunikationselement somit als Energieübertragungsmittel dienen, um die (elektrische) Energie einer fahrzeugexternen Energiequelle an die Kommunikationsvorrichtung zuverlässig und kontaktlos zu übertragen. In anderen Worten kann im Tiefschlafmodus das Kommunikationselement die Funktion bereitstellen, welche im Aktivmodus eine elektrische Übertragungsleitung von der fahrzeugseitigen Energiequelle zur Kommunikationsvorrichtung hat. Ferner kann die Überführung in den Aktivmodus insbesondere stromlos in Bezug auf die fahrzeuginterne Energieversorgung erfolgen, d. h. ausschließlich durch Nutzung der fahrzeugexternen Energieversorgung.

In einer weiteren Möglichkeit kann vorgesehen sein, dass in einem Tiefschlafmodus eine Energieversorgung der Kommunikationsvorrichtung unabhängig von der fahrzeuginternen Energieversorgung herstellbar ist. Es kann also möglich sein, dass die Energieversorgung und damit der Betrieb der Kommunikationsvorrichtung durch eine fahrzeugexterne Energiequelle ermöglicht wird, ohne dass eine fahrzeuginterne Energieversorgung, also die Energieversorgung durch die fahrzeugseitige Energiequelle, notwendig ist. Die fahrzeugseitige Energiequelle ist dabei z. B. ein Akkumulator des Fahrzeuges. Insbesondere wird unter der fahrzeuginternen Energieversorgung nicht verstanden, dass lediglich ein Zwischenspeicher (ein Energiespeicherelement wie ein Kondensator oder dergleichen) durch die Kommunikationsvorrichtung genutzt wird - sondern zusätzlich immer eine fahrzeuginterne Energiequelle wie ein Akkumulator. Denn auch bei der fahrzeugexternen Energieversorgung ist es ggf. notwendig, dass solche Zwischenspeicher eingesetzt werden, um eine ausreichende Zwischenspeicherung elektrischer Energie für einen Betrieb der Kommunikationsvorrichtung bereitzustellen.

Vorteilhafterweise kann im Rahmen der Erfindung vorgesehen sein, dass ein Kommunikationselement vorgesehen ist, welches über eine erste Verschaltung mit einem Energiespeicherelement, insbesondere einem Kondensator, verbunden ist, um die fahrzeugexterne Energieversorgung in einem passiven Tiefschlafmodus insbesondere zum Wecken der Fahrzeugelektronik bereitzustellen, und vorzugsweise über eine zweite Verschaltung mit einem Versorgungsanschluss zur Anbindung an eine fahrzeugseitige Energiequelle verbunden ist, um die fahrzeuginterne Energieversorgung in einem Aktivmodus zur Durchführung einer aktiven Datenübertragung mit der Kommunikationsvorrichtung bereitzustellen. Damit kann der Aktivmodus dazu dienen, eine Datenübertragung durch die Kommunikationsvorrichtung durchzuführen, z. B. zur Authentifizierung und vorzugsweise Aktivierung sicherheitsrelevanter Fahrzeugfunktionen anhand der Authentifizierung. Um in diesen Modus zu gelangen, und ggf. auch andere Fahrzeugfunktionen durch die Fahrzeugelektronik bereitzustellen, kann ein Wecken aus dem Tiefschlafmodus erforderlich sein. Hierzu wird kurzzeitig (über die Zwischenspeicherung des Energiespeicherelements) eine Energieversorgung in der Kommunikationsvorrichtung bereitgestellt, welche die Energie einer fahrzeugexternen Energiequelle nutzt. Damit kann der Tiefschlafmodus besonders energie- und insbesondere stromsparend ausgeführt sein.

Es kann im Rahmen der Erfindung vorgesehen sein, dass die Kommunikationsvorrichtung als eine NFC-Schnittstelle ausgeführt ist, wobei vorzugsweise die NFC-Schnittstelle durch die Bereitstellung der fahrzeugexternen Energieversorgung von einem Tiefschlafmodus zur passiven Kommunikation in einen Aktivmodus zur aktiven Kommunikation überführbar ist. Es kann sich hierbei um eine aktive und passive Kommunikation im Sinne des NFC-Standards handeln. Damit ist eine einfache und durch viele Kommunikationsgeräte unterstützte Möglichkeit bereitgestellt, die Überführung in den Aktivmodus herzustellen.

Beispielsweise kann es vorgesehen sein, dass ein Kommunikationselement vorgesehen ist, welches als Antenne und/oder Spule ausgeführt ist, um die Energieübertragung zur fahrzeugexternen Energieversorgung und insbesondere auch die Datenübertragung mittels induktiver Kopplung bereitzustellen. Vorzugsweise ist das Kommunikationselement als Nahfeld-Übertragungsspule ausgeführt, welche somit bereits zur Energieübertragung in der Lage ist. Somit kann kostensparend und platzsparend die fahrzeugexterne Energieversorgung bereitgestellt werden.

Vorteilhaft ist es darüber hinaus, wenn im Rahmen der Erfindung die Kommunikationsvorrichtung zur Anordnung in einem Türgriff und/oder in einem Sensor und/oder an einer B-Säule des Fahrzeuges ausgeführt ist. Damit kann eine besonders platzsparende Anordnung erzielt werden.

Ebenfalls Gegenstand der Erfindung ist ein System, vorzugsweise Kommunikationssystem, für ein Fahrzeug, aufweisend:
- eine, insbesondere erfindungsgemäße, Kommunikationsvorrichtung zur Durchführung einer kontaktlosen (insbesondere drahtlosen) Datenübertragung, vorzugsweise Nahfeld-Übertragung, zwischen einer Fahrzeugelektronik und einem fahrzeugexternen Gerät,
- eine Umschaltvorrichtung zum Wechsel zwischen einem Aktivmodus und einem Tiefschlafmodus der Kommunikationsvorrichtung.

Hierbei ist insbesondere vorgesehen, dass in dem Aktivmodus eine Energieversorgung zumindest der Kommunikationsvorrichtung (und/oder auch weiterer elektrischer Komponenten des Fahrzeuges) fahrzeugintern und in dem Tiefschlafmodus die Energieversorgung, insbesondere ausschließlich, fahrzeugextern herstellbar ist.

Damit bringt das erfindungsgemäße System die gleichen Vorteile mit sich, wie sie ausführlich mit Bezug auf eine erfindungsgemäße Kommunikationsvorrichtung beschrieben worden sind. Zudem kann das System eine erfindungsgemäße Kommunikationsvorrichtung aufweisen.

Insbesondere ist die Umschaltvorrichtung Teil des Fahrzeuges und/oder der Fahrzeugelektronik und/oder der Kommunikationsvorrichtung, und vorzugsweise von außerhalb des Fahrzeuges manuell nicht erreichbar, um eine sichere Umschaltung zu ermöglichen.

Vorzugsweise ist das fahrzeugexterne Gerät als ein Mobiltelefon und/oder Smartphone und/oder mobiles Kommunikationsgerät und/oder Identifikationsgeber zur Authentifizierung am Fahrzeug ausgeführt. Bevorzugt weist das fahrzeugexterne Gerät eine Kommunikations-Schnittstelle (insbesondere Kommunikationseinheit) zur Nahfeld-Kommunikation mit dem Kommunikationsgerät auf. Das fahrzeugexterne Gerät kann dabei als ein mobiles Gerät ausgeführt sein, d. h. als tragbares Gerät.

In einer weiteren Möglichkeit kann vorgesehen sein, dass wenigstens eine fahrzeugseitige Energiequelle zur Energieversorgung der, insbesondere sämtlicher, Fahrzeugelektronik des Fahrzeuges vorgesehen ist, wobei vorzugsweise die Energieversorgung durch die fahrzeugseitige Energiequelle im Tiefschlafmodus vollständig deaktivierbar und im Aktivmodus vollständig herstellbar ist, um bevorzugt durch das Wechseln vom Tiefschlafmodus in den Aktivmodus das Fahrzeug zu wecken. Bevorzugt kann die gesamte Fahrzeugelektronik sämtliche Steuergeräte des Fahrzeuges oder die überwiegende Anzahl der Steuergeräte des Fahrzeuges aufweisen, um insbesondere den Tiefschlafmodus als einen Transportmodus bereitzustellen. Das heißt der Tiefschlafmodus eignet sich besonders für einen längeren Stillstand des Fahrzeuges, z. B. bei einem Transport per Schiff oder dergleichen.

Auch ist es optional denkbar, dass die Kommunikationsvorrichtung zur Kommunikation mit dem externen Gerät in Form eines mobilen Kommunikationsgeräts, vorzugsweise Mobilfunkgeräts, bevorzugt Smartphones, ausgeführt ist, wobei vorzugsweise ein Kommunikationselement der Kommunikationsvorrichtung zur kontaktlosen, insbesondere induktiven, Energieaufnahme von einer Kommunikationseinheit, insbesondere einer aktiven NFC-Einheit, des Geräts zur fahrzeugexternen Energieversorgung ausgeführt ist. Sowohl das Kommunikationselement als auch die Kommunikationseinheit können dabei wenigstens eine Spule aufweisen, um zur zuverlässigen Energieübertragung miteinander lose gekoppelt zu werden.

Es kann ferner möglich sein, dass die Kommunikationsvorrichtung, insbesondere nur im Aktivmodus oder sowohl im Aktivmodus als auch im Tiefschlafmodus bei hergestellter fahrzeugexterner Energieversorgung, zur Durchführung einer Authentifizierung des externen Geräts anhand der Datenübertragung ausgeführt ist. Bspw. wird hierzu ein Code übertragen, um eine sichere Authentifizierung zu ermöglichen.

In einer weiteren Möglichkeit kann vorgesehen sein, dass die Kommunikationsvorrichtung im Aktivmodus dazu ausgeführt ist, wiederholt, vorzugsweise maximal im zeitlichen Abstand von 100 ms oder 200 ms oder 1 s oder 10 s, aktiv ein Kommunikationssignal zur Kopplung mit dem externen Gerät auszusenden. In anderen Worten kann die Kommunikationsvorrichtung im Aktivmodus als ein aktiv pollendes Gerät ausgeführt sein, um zuverlässig und schnell Kommunikationsteilnehmer in der Umgebung zu kontaktieren. Daher kann es im Aktivmodus zu einem hohen Energieverbrauch kommen, was bei langem Stillstand des Fahrzeuges problematisch sein kann. Entsprechend sollte bei einem kritischen Ladezustand der fahrzeugseitigen Energiequelle in den Tiefschlafmodus umgeschaltet werden.

Es ist denkbar, dass im Aktivmodus automatisch in den Tiefschlafmodus gewechselt wird, also vorzugsweise die fahrzeuginterne Energieversorgung der Kommunikationsvorrichtung deaktiviert wird, wenn ein Ladezustand einer fahrzeugseitigen Energiequelle kritisch ist. Dies kann z. B. durch eine Überwachungsvorrichtung des Fahrzeuges und/oder eines Batteriemanagementsystems des Fahrzeuges detektiert werden, und bei positiver Detektion des kritischen Ladezustands automatisch die Umschaltung vom Aktivmodus in den Tiefschlafmodus initiiert werden.

Vorteilhaft ist es darüber hinaus, wenn im Rahmen der Erfindung die Fahrzeugelektronik als wenigstens ein Steuergerät und/oder Sicherheitssystem des Fahrzeuges vorgesehen ist, und vorzugsweise eine drahtlose oder kabelgebundene Datenverbindung mit der Kommunikationsvorrichtung aufweist, wobei bevorzugt durch die Herstellung der fahrzeugexternen Energieversorgung im Tiefschlafmodus eine Kommunikation zwischen der Kommunikationsvorrichtung und der Fahrzeugelektronik mittels der Datenverbindung durchführbar ist. Auf diese Weise kann zuverlässig in den Aktivmodus gewechselt werden, wobei hierzu ggf. zunächst die Kommunikation durch die Fahrzeugelektronik ausgewertet wird (z. B. ein Authentifizierungscode oder dergleichen, um festzustellen, ob der Wechsel erfolgen darf). Dies entspricht somit insbesondere einem Wecken des Fahrzeuges, um in den regulären Betrieb zu wechseln.

Ferner kann im Rahmen der Erfindung vorgesehen sein, dass der Tiefschlafmodus als ein Transportmodus für einen Langzeittransport des Fahrzeuges ausgeführt ist. Ein solcher Langzeittransport ist bspw. das Verschiffen des Fahrzeuges, in welchem die Fahrzeugelektronik über sehr lange Zeit deaktiviert sein sollte.

Ebenfalls Gegenstand der Erfindung ist ein Verfahren zum energiesparenden Betreiben wenigstens einer Komponente eines Fahrzeuges.

Hierbei ist vorgesehen, dass wenigstens einer der nachfolgenden Schritte durchgeführt wird, vorzugsweise nacheinander (in der angegebenen Reihenfolge) oder in beliebiger Reihenfolge, wobei ggf. einzelne Schritte auch wiederholt durchgeführt werden können:
a) Deaktivieren einer fahrzeuginternen Energieversorgung für die wenigstens eine Komponente, um in einen Tiefschlafmodus zu wechseln,
b) Aktivieren der fahrzeuginternen Energieversorgung für die wenigstens eine Komponente, wenn eine fahrzeugexterne Energieversorgung an einer (insbesondere erfindungsgemäßen) Kommunikationsvorrichtung des Fahrzeuges bereitgestellt wird, um in einen Aktivmodus zu wechseln.

Damit bringt das erfindungsgemäße Verfahren die gleichen Vorteile mit sich, wie sie ausführlich mit Bezug auf eine erfindungsgemäße Kommunikationsvorrichtung und/oder ein erfindungsgemäßes System beschrieben worden sind. Zudem kann das Verfahren geeignet sein, eine erfindungsgemäße Kommunikationsvorrichtung und/oder ein erfindungsgemäßes System zu betreiben.

Es kann im Rahmen der Erfindung möglich sein, dass durch die Bereitstellung der fahrzeugexternen Energieversorgung wenigstens eine der nachfolgenden Komponenten von einem Tiefschlafmodus, in welchem die Energieversorgung der jeweiligen Komponente deaktiviert ist, in einen Aktivmodus überführt wird, in welchem die Energieversorgung der jeweiligen Komponente hergestellt ist:
- ein optischer Sensor,
- ein kapazitiver Sensor,
- die Kommunikationsvorrichtung zur Authentifizierung eines externen Geräts, insbesondere Kommunikationsgerätes, vorzugsweise Mobilfunkgeräts und/oder Smartphone und/oder Identifikationsgeber,
- wenigstens ein oder sämtliche oder die überwiegende Anzahl der Steuergeräte des Fahrzeuges,
- ein sicherheitsrelevantes Steuergerät oder sämtliche sicherheitsrelevante Steuergeräte des Fahrzeuges,
- ein Multimediasystem des Fahrzeuges.

Ferner ist es optional vorgesehen, dass gemäß Schritt b) die fahrzeugexterne Energieversorgung an der Kommunikationsvorrichtung dadurch bereitgestellt wird, dass eine, insbesondere induktive, Kopplung der Kommunikationsvorrichtung mit einem externen Gerät zur Energieübertragung erfolgt, wobei vorzugsweise die Energieübertragung an ein Aktivieren und/oder Betreiben einer elektronischen Umschaltvorrichtung, insbesondere der Kommunikationsvorrichtung, angepasst ist, durch welche der Wechsel in den Aktivmodus initiiert wird. Insbesondere kann die Energieübertragung nicht ausreichend sein, um die gesamte Fahrzeugelektronik zu betreiben. Hierfür ist entsprechend die Umschaltung in den Aktivmodus notwendig sein. Bspw. ist die Energieübertragung darauf angepasst, also darauf ausgelegt, die Übertragungsvorrichtung zu aktivieren (also z. B. ein Wecksignal zu erzeugen) oder zu betreiben, also die Energieversorgung zum Betreiben der Umschaltvorrichtung herzustellen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht eines Fahrzeuges mit einer Umgebung des Fahrzeuges,
- Figur 2: eine schematische Darstellung zumindest von Teilen eines erfindungsgemäßen Systems.

In den nachfolgenden Figuren werden für die gleichen technischen Merkmale auch von unterschiedlichen Ausführungsbeispielen die identischen Bezugszeichen verwendet.

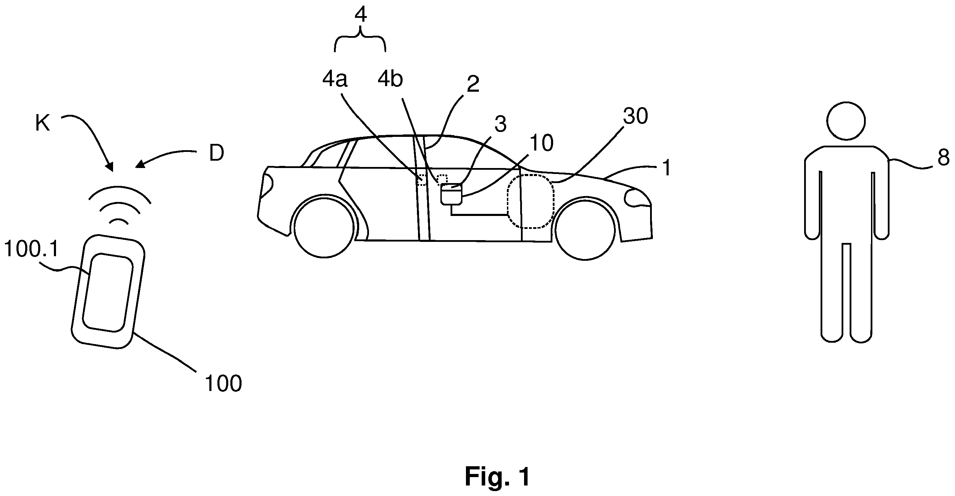

In Figur 1 ist schematisch ein Fahrzeug 1 in einer Seitenansicht dargestellt. Ferner ist zur Veranschaulichung eines erfindungsgemäßen Verfahrens ein in Bezug auf das Fahrzeug 1 extern vorgesehenes (also fahrzeugexternes) Gerät 100 gezeigt, welches beispielsweise als mobiles Kommunikationsgerät und/oder als mobiler Identifikationsgeber ausgeführt sein kann. Beispielsweise handelt es sich bei dem fahrzeugexternen Gerät 100 um ein Smartphone oder dergleichen. Dies hat den Vorteil, dass das fahrzeugexterne Gerät 100 bereits verschiedene Schnittstellen zur Kommunikation, insbesondere Funkkommunikation, mit dem Fahrzeug 1 aufweisen kann. Beispielhaft kann als eine solche Schnittstelle des fahrzeugexternen Geräts 100 eine Kommunikationseinheit 100.1 vorgesehen sein, welche zum Beispiel als NFC (Near Field Communication) Einheit ausgeführt ist. In anderen Worten kann die Kommunikationseinheit 100.1 als NFC-Schnittstelle ausgeführt sein und somit eine drahtlose (kontaktlose) Daten- und/oder Energieübertragung ermöglichen. Hierzu können beispielsweise Funksignale zwischen der Kommunikationseinheit 100.1 und einer Kommunikationsvorrichtung 10 des Fahrzeuges übertragen werden, insbesondere bei einer Frequenz von 13,56 MHZ. Dies hat den Vorteil, dass eine zuverlässige und kontaktlose (d. h. beispielsweise funkbasierte) Kommunikation zwischen der Kommunikationsvorrichtung 10 des Fahrzeuges 1 und dem fahrzeugexternen Geräts 100 möglich ist. Diese Kommunikation dient beispielsweise zur Authentifizierung des fahrzeugexternen Geräts 100 am Fahrzeug 1, so dass ein Benutzer 8 das fahrzeugexterne Gerät 100 als Identifikationsgeber zum Aktivieren einer sicherheitsrelevanten Funktion des Fahrzeuges 1 nutzen kann. Die sicherheitsrelevante Funktion kann beispielsweise ein Entriegeln des Fahrzeuges 1 oder das Öffnen einer Heckklappe oder dergleichen sein.

Um die Kommunikation zu initiieren und/oder einen Authentifizierungsvorgang zu starten, kann eine Annäherung des Benutzers 8 und/oder des fahrzeugexternen Geräts 100 an das Fahrzeug 1 detektiert werden. Hierzu ist beispielsweise wenigstens ein Sensor 4, insbesondere ein Näherungssensor und/oder optischer Sensor, vorgesehen. Beispielhaft sind in Figur 1 ein optischer Sensor 4a im Bereich einer B-Säule 2 des Fahrzeuges 1 sowie ein kapazitiver Sensor 4b im Bereich eines Türgriffes 3 eines Fahrzeuges 1 dargestellt. Ein jeweiliger Sensor 4 und/oder die angegebenen Positionen am Fahrzeug 1 eignen sich dabei auch ggf. zur Anordnung der Kommunikationsvorrichtung 10. Dies ermöglicht es, dass der Benutzer 8 sehr intuitiv das fahrzeugexterne Gerät 100 z. B. an den Türgriff 3 oder an den Sensor 4 halten kann, um die Daten- und/oder Energieübertragung D mittels der Kommunikation durchzuführen.

Ferner ist in Figur 1 schematisch gezeigt, dass die Kommunikationsvorrichtung 10 elektrisch und/oder über Funk mit einer Fahrzeugelektronik 30 des Fahrzeuges 1 in Verbindung stehen kann. Dabei umfasst die Fahrzeugelektronik z. B. wenigstens ein Steuergerät 30 eines Sicherheitssystems des Fahrzeuges 1. Dies erlaubt es für die Fahrzeugelektronik 30, die über die Kommunikation übertragenen Daten über die Kommunikationsvorrichtung 10 zu empfangen und auszuwerten. Beispielsweise wird auf diese Weise ein mittels der Kommunikation übertragener Code ausgewertet, um die Authentifizierung durchzuführen.

Um den Komfort für den Benutzer 8 zur Durchführung der Kommunikation zu erhöhen und/oder um die Kommunikation zuverlässiger bereitzustellen, kann die Kommunikationsvorrichtung 10 als aktive Schnittstelle, insbesondere Funkschnittstelle, vorzugsweise NFC-Schnittstelle, ausgeführt sein. Dies bedeutet insbesondere, dass die Kommunikationsvorrichtung aktiv ein Funksignal und/oder ein magnetisches Feld aussenden bzw. erzeugen kann und/oder eine verbindungsbehaftete Datenübertragung (insbesondere im Sinne einer NFC-Kommunikation) durchführen kann und/oder eine fahrzeuginterne Energieversorgung iE zum Betreiben der Kommunikationsvorrichtung 10, vorzugsweise einer Auswerteeinheit 10.1 der Kommunikationsvorrichtung 10, nutzt. Dagegen kann unter einer passiven Schnittstelle verstanden werden, dass eine Übertragung (z. B. im Sinne einer NFC-Kommunikation) lediglich verbindungslos erfolgen kann und/oder dass nicht aktiv ein Funksignal ausgesendet und/oder ein magnetisches Feld erzeugt werden kann und/oder dass die Energieversorgung ausschließlich extern hergestellt werden muss, z. B. aus einem empfangenen Funksignal und/oder vorhandenen magnetischen Feld. Im engeren Sinne können "passiv" sowie "aktiv" im Sinne der Verwendung bei NFC-Schnittstellen und/oder der RFID (Radio Frequency Identification) verstanden werden. Ferner kann im weiteren Sinne darunter verstanden werden, dass die passive Schnittstelle über ein Funksignal und/oder magnetisches Feld mit Energie versorgt wird und die aktive Schnittstelle unabhängig von einem Funksignal mit Energie versorgt wird. Darüber hinaus ist es denkbar, dass eine Schnittstelle, insbesondere die Kommunikationsvorrichtung 10, in einem aktiven sowie in einem passiven Modus betrieben werden kann. Im passiven Modus weist die Schnittstelle dabei die Eigenschaften einer passiven Schnittstelle auf und im aktiven Modus weist die Schnittstelle die Eigenschaften einer aktiven Schnittstelle auf. So kann die Kommunikationsvorrichtung 10 im Normalbetrieb des Fahrzeuges 1 im aktiven Modus betrieben werden, bei welchem die Energieversorgung der Kommunikationsvorrichtung 10 fahrzeugintern durch das Fahrzeug 1, insbesondere durch eine fahrzeugseitige Energiequelle 5 wie eine Fahrzeugbatterie, bereitgestellt ist. Diese fahrzeuginterne Energieversorgung iE wird vorteilhafterweise dadurch ermöglicht, dass die Kommunikationsvorrichtung 10 elektrisch mit einem Bordnetz des Fahrzeuges 1 verbunden ist, wobei das Bordnetz durch die fahrzeugseitige Energiequelle 5 mit elektrischer Energie gespeist wird. In diesem Fall kann auch von einem Aktivmodus I gesprochen werden.

Erfindungsgemäß kann dabei vorgesehen sein, dass bei dem Fahrzeug 1, insbesondere bei der Kommunikationsvorrichtung 10, ein Wechsel von einem Aktivmodus I in einen Tiefschlafmodus II möglich ist. Dies ist beispielsweise dann sinnvoll, wenn ein längerer Stillstand, z. B. aufgrund eines Langzeittransportes des Fahrzeuges 1, erforderlich ist. Da es sich bei der Kommunikationsvorrichtung 10 um ein pollendes System handeln kann, welches in regelmäßigen Abständen ein Funksignal aussendet, ist im Aktivmodus I der Energieverbrauch ggf. für einen längeren Fahrzeugstillstand zu hoch. Es ist daher erforderlich, den Energieverbrauch der Kommunikationsvorrichtung 10 und/oder auch weiterer Komponenten des Fahrzeuges 1, insbesondere der vollständigen Fahrzeugelektronik 30, im Tiefschlafmodus II zu reduzieren und/oder vollständig zu deaktivieren. Im Tiefschlafmodus II kann daher die Energieversorgung durch die fahrzeugseitige Energiequelle 5 (d. h. die fahrzeuginterne Energieversorgung iE) vollständig oder überwiegend für die Kommunikationsvorrichtung 10 und/oder für zumindest die teilweise Fahrzeugelektronik 30 deaktiviert sein. Ohne äußere Einflüsse ist daher die Kommunikationsvorrichtung 10 und/oder die (beispielsweise gesamte) Fahrzeugelektronik 30 vollständig ausgeschaltet und/oder energielos im Tiefschlafmodus II ausgeführt. Dabei kann die Kommunikationsvorrichtung 10 im Tiefschlafmodus II im passiven Modus betrieben werden, so dass der Betrieb der Kommunikationsvorrichtung 10 zumindest teilweise durch äußere Einflüsse, wie ein Funksignal und/oder eine induktive Kopplung K, möglich ist. In anderen Worten kann die Kommunikationsvorrichtung 10 im Tiefschlafmodus II bzw. im passiven Modus durch eine fahrzeugexterne Energieversorgung eE, d. h. z. B. durch den äußeren Einfluss wie das Funksignal und/oder die induktive Kopplung K, betrieben werden. Dieser Betrieb im Tiefschlafmodus II kann derart ausgeführt sein, dass die Kommunikationsvorrichtung 10 einen Weckvorgang startet. Sobald also der Betrieb der Kommunikationsvorrichtung 10 im Tiefschlafmodus II durch die fahrzeugexterne Energieversorgung eE ermöglicht wird, wird die Kommunikationsvorrichtung 10 derart betrieben, dass der Weckvorgang durchgeführt wird. Der Weckvorgang umfasst dabei beispielsweise eine Aktivierung der fahrzeuginternen Energieversorgung iE. Entsprechend kann die Kommunikationsvorrichtung 10 dazu ausgeführt sein, eine fahrzeuginterne Energieversorgung iE der Kommunikationsvorrichtung 10 mittels einer fahrzeugexternen Energieversorgung eE an der Kommunikationsvorrichtung 10 zu aktivieren. Darüber hinaus ist es auch denkbar, dass beim Weckvorgang vor der Aktivierung der fahrzeuginternen Energieversorgung iE zunächst eine Authentifizierung des fahrzeugexternen Geräts 100 erfolgt. Dies ist beispielsweise dann sinnvoll, wenn die Sicherheit für diese Aktivierung erhöht werden soll.

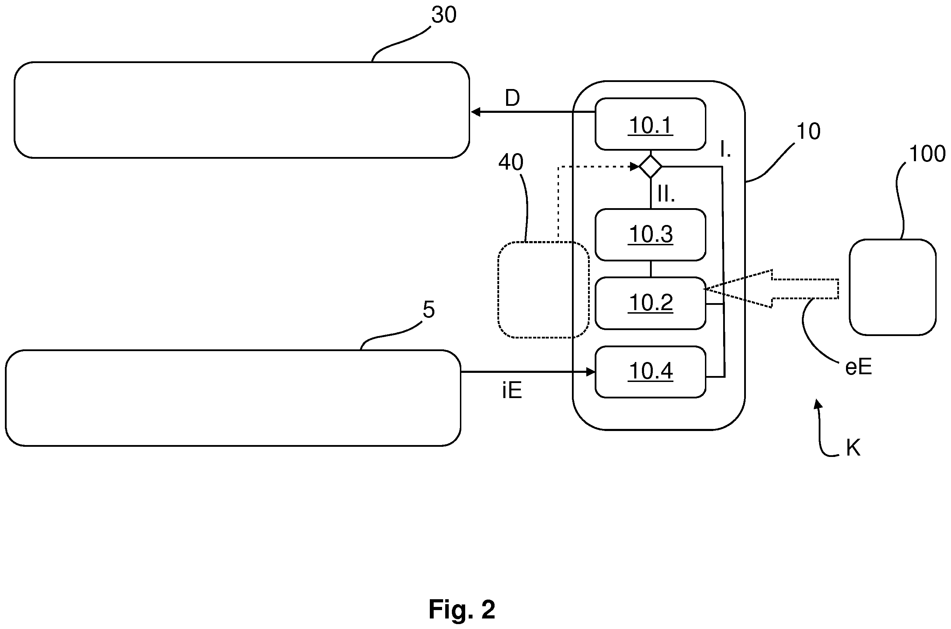

In Figur 2 ist beispielhaft ein erfindungsgemäßes System dargestellt, welches den Weckvorgang, also einen Wechsel vom Tiefschlafmodus II in den Aktivmodus I, bereitstellen kann. Im Tiefschlafmodus II hält ein Benutzer 8 das fahrzeugexterne Gerät 100 z. B. nah an ein Kommunikationselement 10.2 der Kommunikationsvorrichtung 10 des Fahrzeuges 1. Das Kommunikationselement 10.2 ist z. B. eine Spule und/oder Antenne, welche entsprechend den Empfang von Funksignalen, insbesondere die Durchführung einer induktiven Kopplung K, ermöglicht. Optional kann es vorgesehen sein, dass dieses Kommunikationselement 10.2 und/oder ein weiteres Kommunikationselement der Kommunikationsvorrichtung 10 auch zur Datenübertragung D genutzt wird. Um die fahrzeugexterne Energieversorgung eE bereitzustellen, kann über das Funksignal bzw. die induktive Kopplung K eine Energieübertragung von dem fahrzeugexternen Gerät 100 an die Kommunikationsvorrichtung 10 erfolgen, insbesondere durch die Nutzung eines magnetischen und/oder elektromagnetischen Wechselfelds. Vorteilhafterweise wird hierzu die Kommunikationsvorrichtung 10 im passiven Modus zur passiven Kommunikation betrieben. Ferner kann es möglich sein, dass durch die übertragene Energie, welche z. B. einen Stromfluss beim Kommunikationselement 10.2 bewirkt, ein Energiespeicherelement 10.3 wie ein Kondensator bei der Kommunikationsvorrichtung 10 aufgeladen wird. Dies ermöglicht eine Zwischenspeicherung der übertragenen Energie zum Betreiben der Kommunikationsvorrichtung 10. Insbesondere wird dabei eine Verarbeitungseinheit 10.1 der Kommunikationsvorrichtung 10 betrieben, um ein Wecksignal zur Aktivierung einer Umschaltvorrichtung 40 zu senden. In anderen Worten kann die Umschaltvorrichtung 40 bei der Bereitstellung der fahrzeugexternen Energieversorgung eE an der Kommunikationsvorrichtung 10 zur Durchführung eines Wechsels vom Tiefschlafmodus II in den Aktivmodus I getriggert werden. Dies wird beispielsweise dadurch ermöglicht, dass ein elektronischer Schalter des Fahrzeuges 1, insbesondere der Fahrzeugelektronik 30, durch die Umschaltvorrichtung 40 geschaltet werden kann. Die Umschaltvorrichtung 40 kann dabei z. B. Teil der Fahrzeugelektronik 30 und/oder Teil der Kommunikationsvorrichtung 10 sein. Damit der Übergang in den Aktivmodus I erfolgreich ist, wird hierfür eine fahrzeuginterne Energieversorgung iE hergestellt. Dies erfolgt z. B. durch die Nutzung eines Versorgungsanschlusses 10.4 der Kommunikationsvorrichtung 10, über welchen die fahrzeugseitige Energiequelle 5 mit der Kommunikationsvorrichtung 10 verbunden wird. Im Aktivmodus I ist sodann der Betrieb der Kommunikationsvorrichtung 10, insbesondere der Verarbeitungseinheit 10.1, unabhängig von der fahrzeugexternen Energieversorgung eE möglich. Auf diese Weise kann im Aktivmodus I z. B. die Datenübertragung D vom fahrzeugexternen Gerät 100 an die Fahrzeugelektronik 30 über die Kommunikationsvorrichtung 10, insbesondere durch die Verarbeitungseinheit 10.1, durchgeführt werden.

Zur Verdeutlichung ist in Figur 2 eine schematische Verschaltung der Kommunikationsvorrichtung 10 gezeigt, wobei in dem Aktivmodus I die Verarbeitungseinheit 10.1 mit dem Kommunikationselement 10.2 und dem Versorgungsanschluss 10.4 verbunden ist. Hierdurch wird deutlich, dass der Betrieb der Kommunikationsvorrichtung 10 durch eine fahrzeuginterne Energieversorgung iE ermöglicht wird. Hingegen ist im Tiefschlafmodus II die Verarbeitungseinheit 10.1 mit dem Energiespeicherelement 10.3 und dem Kommunikationselement 10.2 verbunden, so dass die Energieversorgung fahrzeugextern erfolgen kann. Selbstverständlich ist diese Darstellung rein schematisch und kann funktional durch unterschiedliche Schaltanordnungen der Kommunikationsvorrichtung 10 ermöglicht werden, insbesondere auch durch eine entsprechende Programmierung der Verarbeitungseinheit 10.1 und/oder der Umschaltvorrichtung 40.

### Bezugszeichenliste

- 1: Fahrzeug
- 2: B-Säule
- 3: Türgriff
- 4: Sensor, Näherungssensor, optischer Sensor

- 4a: optischer Sensor
- 4b: kapazitiver Sensor
- 5: fahrzeugseitige Energiequelle
- 8: Benutzer

- 10: Kommunikationsvorrichtung, NFC-Schnittstelle
- 10.1: Verarbeitungseinheit
- 10.2: Kommunikationselement, Spule
- 10.3: Energiespeicherelement
- 10.4: Versorgungsanschluss

- 30: Steuergerät, Fahrzeugelektronik

- 40: Umschaltvorrichtung

- 100: Gerät, Kommunikationsgerät, Identifikationsgeber
- 100.1: Kommunikationseinheit, NFC-Einheit

- eE: fahrzeugexterne Energieversorgung
- iE: fahrzeuginterne Energieversorgung
- D: Datenübertragung- und/oder Energieübertragung
- I: Aktivmodus
- II: Tiefschlafmodus
- K: Kopplung

## Patentansprüche

1. Kommunikationsvorrichtung (10) für ein Fahrzeug (1) zur Durchführung einer kontaktlosen Datenübertragung (D) zwischen einer Fahrzeugelektronik (30) und einem fahrzeugexternen Gerät (100), wobei die Kommunikationsvorrichtung (10) dazu ausgeführt ist, eine fahrzeuginterne Energieversorgung (iE) der Kommunikationsvorrichtung (10) mittels einer fahrzeugexternen Energieversorgung (eE) an der Kommunikationsvorrichtung (10) zu aktivieren,
wobei die Kommunikationsvorrichtung (10) dazu ausgeführt ist, in einem Aktivmodus (I) mit einer fahrzeugseitigen Energiequelle (5) zur fahrzeuginternen Energieversorgung (iE) elektrisch verbindbar zu sein, um die Datenübertragung (D) durchzuführen, wobei die fahrzeugseitige Energiequelle (5) dazu ausgeführt ist, elektrische Komponenten des Fahrzeuges (1) über ein Bordnetz mit elektrischer Energie zu versorgen.

2. Kommunikationsvorrichtung (10) nach Anspruch 1,
**dadurch gekennzeichnet,**
**dass** ein Kommunikationselement (10.2) zur kontaktlosen Kopplung (K) mit dem fahrzeugexternen Gerät (100) vorgesehen ist, um in einem Tiefschlafmodus (II) der Kommunikationsvorrichtung (10) die fahrzeugexterne Energieversorgung (eE) über die Kopplung (K) an der Kommunikationsvorrichtung (10) bereitzustellen.

3. Kommunikationsvorrichtung (10) nach Anspruch 1 oder 2,
**dadurch gekennzeichnet,**
**dass** die Kommunikationsvorrichtung (10) dazu ausgeführt ist, in einem Tiefschlafmodus (II) mit einem Kommunikationselement (10.2) der Kommunikationsvorrichtung (10) verbunden zu sein, um eine Überführung in den Aktivmodus (I) zu initiieren, sobald die fahrzeugexterne Energieversorgung (eE) bereitgestellt ist.

4. Kommunikationsvorrichtung (10) nach einem der vorhergehenden Ansprüche,
**dadurch gekennzeichnet,**
**dass** in einem Tiefschlafmodus (II) eine Energieversorgung der Kommunikationsvorrichtung (10) unabhängig von der fahrzeuginternen Energieversorgung (iE) herstellbar ist.

5. Kommunikationsvorrichtung (10) nach einem der vorhergehenden Ansprüche,
**dadurch gekennzeichnet,**
**dass** ein Kommunikationselement (10.2) vorgesehen ist, welches über eine erste Verschaltung mit einem Energiespeicherelement (10.3), insbesondere einem Kondensator, verbunden ist, um die fahrzeugexterne Energieversorgung (eE) in einem passiven Tiefschlafmodus (II) zum Wecken der Fahrzeugelektronik (30) bereitzustellen, und über eine zweite Verschaltung mit einem Versorgungsanschluss (10.4) zur Anbindung an eine fahrzeugseitige Energiequelle (5) verbunden ist, um die fahrzeuginterne Energieversorgung (iE) in einem Aktivmodus (I) zur aktiven Datenübertragung (D) der Kommunikationsvorrichtung (10) bereitzustellen.

6. Kommunikationsvorrichtung (10) nach einem der vorhergehenden Ansprüche,
**dadurch gekennzeichnet,**
**dass** die Kommunikationsvorrichtung (10) als eine NFC-Schnittstelle (10) ausgeführt ist, wobei die NFC-Schnittstelle (10) durch die Bereitstellung der fahrzeugexternen Energieversorgung (eE) von einem Tiefschlafmodus (II) zur passiven Kommunikation in einen Aktivmodus (I) zur aktiven Kommunikation überführbar ist und/oder dass ein Kommunikationselement (10.2) vorgesehen ist, welches als Antenne (10.2) und/oder Spule (10.2) ausgeführt ist, um die Energieübertragung zur fahrzeugexternen Energieversorgung (eE) und insbesondere auch die Datenübertragung (D) mittels induktiver Kopplung bereitzustellen
und/oder dass die Kommunikationsvorrichtung (10) zur Anordnung in einem Türgriff (3) und/oder in einem Sensor (4) und/oder an einer B-Säule (2) des Fahrzeuges (1) ausgeführt ist.

7. System für ein Fahrzeug (1), aufweisend:
- eine Kommunikationsvorrichtung (10) nach einem der vorhergehenden Ansprüche zur Durchführung einer kontaktlosen Datenübertragung (D) zwischen einer Fahrzeugelektronik (30) und einem fahrzeugexternen Gerät (100),
- eine Umschaltvorrichtung (40) zum Wechsel zwischen einem Aktivmodus (I) und einem Tiefschlafmodus (II) der Kommunikationsvorrichtung (10),
wobei in dem Aktivmodus (I) eine Energieversorgung zumindest der Kommunikationsvorrichtung (10) fahrzeugintern und in dem Tiefschlafmodus (II) die Energieversorgung fahrzeugextern herstellbar ist.

8. System nach einem der vorhergehenden Ansprüche,
**dadurch gekennzeichnet,**
**dass** wenigstens eine fahrzeugseitige Energiequelle (5) zur Energieversorgung der, insbesondere sämtlicher, Fahrzeugelektronik (30) des Fahrzeuges (1) vorgesehen ist, wobei die Energieversorgung durch die fahrzeugseitige Energiequelle (5) im Tiefschlafmodus (II) vollständig deaktivierbar und im Aktivmodus (I) vollständig herstellbar ist, um durch das Wechseln vom Tiefschlafmodus (II) in den Aktivmodus (I) das Fahrzeug (1) zu wecken.

9. System nach einem der vorhergehenden Ansprüche,
**dadurch gekennzeichnet,**
**dass** die Kommunikationsvorrichtung (10) zur Kommunikation mit dem externen Gerät (100) in Form eines mobilen Kommunikationsgeräts (100), vorzugsweise Mobilfunkgeräts, bevorzugt Smartphones, ausgeführt ist, wobei ein Kommunikationselement (10.2) der Kommunikationsvorrichtung (10) zur kontaktlosen, insbesondere induktiven, Energieaufnahme von einer Kommunikationseinheit (100.1), insbesondere einer aktiven NFC-Einheit (100.1), des Geräts (100) zur fahrzeugexternen Energieversorgung (eE) ausgeführt ist.

10. System nach einem der vorhergehenden Ansprüche,
**dadurch gekennzeichnet,**
**dass** die Kommunikationsvorrichtung (10), insbesondere nur im Aktivmodus (I) oder sowohl im Aktivmodus (I)als auch im Tiefschlafmodus (II) bei hergestellter fahrzeugexterner Energieversorgung (eE), zur Durchführung einer Authentifizierung des externen Geräts (100) anhand der Datenübertragung (D) ausgeführt ist und/oder dass die Kommunikationsvorrichtung (10) im Aktivmodus (I) dazu ausgeführt ist, wiederholt, vorzugsweise maximal im zeitlichen Abstand von 100 ms oder 200 ms oder 1 s oder 10 s, aktiv ein Kommunikationssignal zur Kopplung (K) mit dem externen Gerät (100) auszusenden.

11. System nach einem der vorhergehenden Ansprüche,
**dadurch gekennzeichnet,**
**dass** die Fahrzeugelektronik (30) als wenigstens ein Steuergerät (30) und/oder Sicherheitssystem des Fahrzeuges (1) vorgesehen ist, und eine drahtlose oder kabelgebundene Datenverbindung mit der Kommunikationsvorrichtung (10) aufweist, wobei durch die Herstellung der fahrzeugexternen Energieversorgung (eE) im Tiefschlafmodus (II) eine Kommunikation zwischen der Kommunikationsvorrichtung (10) und der Fahrzeugelektronik (30) mittels der Datenverbindung durchführbar ist.

12. System nach einem der vorhergehenden Ansprüche,
**dadurch gekennzeichnet,**
**dass** der Tiefschlafmodus (II) als ein Transportmodus für einen Langzeittransport des Fahrzeuges (1) ausgeführt ist.

13. Verfahren zum energiesparenden Betreiben wenigstens einer Komponente eines Fahrzeuges (1),
wobei die nachfolgenden Schritte durchgeführt werden:
a) Deaktivieren einer fahrzeuginternen Energieversorgung (iE) für die wenigstens eine Komponente, um in einen Tiefschlafmodus (II) zu wechseln,
b) Aktivieren der fahrzeuginternen Energieversorgung (iE) für die wenigstens eine Komponente, wenn eine fahrzeugexterne Energieversorgung (eE) an einer Kommunikationsvorrichtung (10) nach einem der vorhergehenden Ansprüche des Fahrzeuges (1) bereitgestellt wird, um in einen Aktivmodus (I) zu wechseln.

14. Verfahren nach einem der vorhergehenden Ansprüche,
**dadurch gekennzeichnet,**
**dass** gemäß Schritt b) die fahrzeugexterne Energieversorgung (eE) an der Kommunikationsvorrichtung (10) dadurch bereitgestellt wird, dass eine, insbesondere induktive, Kopplung (K) der Kommunikationsvorrichtung (10) mit einem externen Gerät (100) zur Energieübertragung erfolgt, wobei die Energieübertragung an ein Aktivieren und/oder Betreiben einer elektronischen Umschaltvorrichtung (40), insbesondere der Kommunikationsvorrichtung (10), angepasst ist, durch welche der Wechsel in den Aktivmodus (I) initiiert wird.

15. Verfahren nach einem der vorhergehenden Ansprüche,
**dadurch gekennzeichnet,**
**dass** ein System nach einem der vorhergehenden Ansprüche betrieben wird.

## Claims

1. A communication device (10) for a vehicle (1) for performing a contactless data transmission (D) between a vehicle electronic system (30) and an off-vehicle device (100) wherein the communication device (10) is designed to activate an on-vehicle power supply (iE) of the communication device (10) by means of an off-vehicle power supply (eE) at the communication device (10), the communication device (10) being designed to be electrically connectable in an active mode (I) to an on-vehicle power source (5) for the on-vehicle power supply (iE) in order to carry out the data transmission (D), the on-vehicle power source (5) being designed to supply electrical components of the vehicle (1) with electrical power via an on-board power supply system.

2. Communication device (10) according to claim 1,
**characterized in that**
a communication element (10.2) is provided for contactless coupling (K) with the off-vehicle device (100) in order to provide the off-vehicle power supply (eE) via the coupling (K) to the communication device (10) in a deep sleep mode (II) of the communication device (10).

3. Communication device (10) according to claim 1 or 2,
**characterized in that**
the communication device (10) is designed to be connected to a communication element (10.2) of the communication device (10) in a deep sleep mode (II) in order to initiate a transfer to the active mode (I) as soon as the off-vehicle power supply (eE) is provided.

4. Communication device (10) according to any one of the preceding claims, **characterized in that**
in a deep sleep mode (II), a power supply for the communication device (10) can be established independently of the on-vehicle power supply (iE).

5. Communication device (10) according to any one of the preceding claims, **characterized in that**
a communication element (10.2) is provided which is connected via a first circuit to an energy storage element (10.3), in particular a capacitor, in order to provide the off-vehicle power supply (eE) in a passive deep sleep mode (II) for waking the vehicle electronics (30), and is connected via a second circuit to a supply connection (10.4) for connection to an on-vehicie power source (5) in order to provide the on-vehicle power supply (iE) in an active mode (I) for active data transmission (D) of the communication device (10).

6. Communication device (10) according to any one of the preceding claims, **characterized in that**
the communication device (10) is designed as an NFC interface (10), wherein the NFC interface (10) can be transferred from a deep sleep mode (II) for passive communication to an active mode (I) for active communication by providing the off-vehicle power supply (eE)
and/or **in that** a communication element (10.2) is provided, which is designed as an antenna (10.2) and/or coil (10.2), in order to provide the power transmission to the off-vehicle power supply (eE) and, in particular, also the data transmission (D) by means of inductive coupling
and/or **in that** the communication device (10) is designed to be arranged in a door handle (3) and/or in a sensor (4) and/or on a B-pillar (2) of the vehicle (1).

7. System for a vehicle (1), comprising:
- a communication device (10) according to any one of the preceding claims for performing a contactless data transmission (D) between a vehicle electronic system (30) and an off-vehicle device (100),
- a switching device (40) for switching between an active mode (I) and a deep sleep mode (II) of the communication device (10),
wherein in the active mode (I), a power supply to at least the communication device (10) can be produced internally in the vehicle, and in the deep sleep mode (II), the power supply can be produced externally of the vehicle.

8. System according to any one of the preceding claims,
**characterized in that**
at least one on-vehicle power source (5) is provided for supplying energy to the, in particular all, vehicle electronic systems (30) of the vehicle (1), it being possible for the energy supply to be completely deactivated by the on-vehicle power source (5) in the deep sleep mode (II) and completely produced in the active mode (I) in order to wake the vehicle (1) by changing from the deep sleep mode (II) to the active mode (I).

9. System according to any one of the preceding claims,
**characterized in that**
the communication device (10) for communicating with the external device (100) is designed in the form of a mobile communication device (100), preferably a mobile radio device, preferably a smartphone, with a communication element (10.2) of the communication device (10) being designed for contactless, in particular inductive, power pickup from a communication unit (100.1), in particular an active NFC unit (100.1), of the device (100) for the power supply (eE) external to the vehicle.

10. System according to any one of the preceding claims,
**characterized in that**
the communication device (10), in particular only in the active mode (I) or both in the active mode (I) and in the deep sleep mode (II) when the off-vehicle power supply (eE) is established, is designed to carry out an authentication of the external device (100) on the basis of the data transmission (D)
and/or **in that** the communication device (10) in the active mode (I) is designed to repeatedly, preferably at a maximum time interval of 100 ms or 200 ms or 1 s or 10 s, actively transmit a communication signal for coupling (K) with the external device (100).

11. System according to any one of the preceding claims,
**characterized in that**
the vehicle electronics (30) are provided as at least one control unit (30) and/or safety system of the vehicle (1), and have a wireless or wired data connection to the communication device (10), wherein communication between the communication device (10) and the vehicle electronics (30) can be carried out by means of the data connection by establishing the power supply (eE) external to the vehicle in the deep sleep mode (II).

12. System according to any one of the preceding claims,
**characterized in that**
the deep sleep mode (II) is implemented as a transport mode for long-term transport of the vehicle (1).

13. Method for the energy-saving operation of at least one component of a vehicle (1),
where the following steps are performed:
a) Deactivating an on-vehicle power supply (iE) for the at least one component to switch to a deep sleep mode (II),
b) Activating the on-vehicle power supply (iE) for the at least one component when an off-vehicle power supply (eE) is provided to a communication device (10) according to any of the preceding claims of the vehicle (1) to switch to an active mode (I).

14. The method according to any one of the preceding claims,
**characterized in that**
according to step b), the off-vehicle power supply (eE) is provided to the communication device (10) **in that** a coupling (K), in particular an inductive coupling, of the communication device (10) to an external device (100) for power transmission takes place, the power transmission being adapted to activation and/or operation of an electronic switching device (40), in particular of the communication device (10), by means of which the change to the active mode (I) is initiated.

15. The method according to any one of the preceding claims,
**characterized in that**
a system according to any one of the preceding claims is operated.

## Revendications

1. Dispositif de communication (10) pour un véhicule (1) pour effectuer une transmission de données sans contact (D) entre une électronique de véhicule (30) et un appareil externe au véhicule (100) dans lequel le dispositif de communication (10) est conçu pour activer une alimentation en énergie (iE) interne au véhicule du dispositif de communication (10) au moyen d'une alimentation en énergie (eE) externe au véhicule sur le dispositif de communication (10), le dispositif de communication (10) étant conçu pour être relié électriquement, dans un mode actif (I), à une source d'énergie (5) du véhicule pour l'alimentation en énergie (iE) interne au véhicule, afin d'effectuer la transmission de données (D), la source d'énergie (5) du véhicule étant réalisée pour alimenter en énergie électrique des composants électriques du véhicule (1) via un réseau de bord.

2. Dispositif de communication (10) selon la revendication 1,
**caractérisé en ce que**
un élément de communication (10.2) est prévu pour le couplage (K) sans contact avec l'appareil (100) externe au véhicule, afin de fournir, dans un mode de sommeil profond (II) du dispositif de communication (10), l'alimentation en énergie (eE) externe au véhicule par l'intermédiaire du couplage (K) sur le dispositif de communication (10).

3. Dispositif de communication (10) selon la revendication 1 ou 2,
**caractérisé en ce que**
le dispositif de communication (10) est conçu pour être connecté dans un mode de sommeil profond (II) à un élément de communication (10.2) du dispositif de communication (10) afin d'initier un passage dans le mode actif (I) dès que l'alimentation en énergie externe au véhicule (eE) est fournie.

4. Dispositif de communication (10) selon l'une quelconque des revendications précédentes,
**caractérisé en ce que**
dans un mode de sommeil profond (II), une alimentation en énergie du dispositif de communication (10) peut être établie indépendamment de l'alimentation en énergie (iE) interne au véhicule.

5. Dispositif de communication (10) selon l'une quelconque des revendications précédentes,
**caractérisé en ce que**
il est prévu un élément de communication (10.2) qui est relié par un premier câblage à un élément de stockage d'énergie (10.3), en particulier un condensateur, pour mettre à disposition l'alimentation en énergie externe au véhicule (eE) dans un mode de sommeil profond passif (II) pour réveiller l'électronique du véhicule (30), et par un deuxième câblage à un raccordement d'alimentation (10.4) pour le raccordement à une source d'énergie (5) du véhicule, afin de fournir l'alimentation en énergie (iE) interne au véhicule dans un mode actif (I) pour la transmission active de données (D) du dispositif de communication (10).

6. Dispositif de communication (10) selon l'une quelconque des revendications précédentes,
**caractérisé en ce que**
le dispositif de communication (10) est réalisé sous la forme d'une interface NFC (10), l'interface NFC (10) pouvant être transférée d'un mode de sommeil profond (II) pour la communication passive à un mode actif (I) pour la communication active par la mise à disposition de l'alimentation en énergie (eE) externe au véhicule
et/ou **en ce qu'**il est prévu un élément de communication (10.2) qui est réalisé sous la forme d'une antenne (10.2) et/ou d'une bobine (10.2), afin de mettre à disposition la transmission d'énergie vers l'alimentation en énergie (eE) externe au véhicule et en particulier aussi la transmission de données (D) au moyen d'un couplage inductif et/ou **en ce que** le dispositif de communication (10) est réalisé pour être disposé dans une poignée de porte (3) et/ou dans un capteur (4) et/ou sur un montant B (2) du véhicule (1).

7. Système pour un véhicule (1), comprenant :
- un dispositif de communication (10) selon l'une des revendications précédentes pour réaliser une transmission de données sans contact (D) entre une électronique de véhicule (30) et un appareil externe au véhicule (100),
- un dispositif de commutation (40) pour passer d'un mode actif (I) à un mode de sommeil profond (II) du dispositif de communication (10),
où dans le mode actif (I), une alimentation en énergie au moins du dispositif de communication (10) peut être établie à l'intérieur du véhicule et dans le mode de sommeil profond (II), l'alimentation en énergie peut être établie à l'extérieur du véhicule.

8. Système selon l'une quelconque des revendications précédentes,
**caractérisé en ce que**
au moins une source d'énergie (5) du véhicule est prévue pour l'alimentation en énergie de l'électronique (30) du véhicule (1), en particulier de l'ensemble de celle-ci, l'alimentation en énergie par la source d'énergie (5) du véhicule pouvant être entièrement désactivée en mode de sommeil profond (II) et entièrement établie en mode actif (I), afin de réveiller le véhicule (1) par le passage du mode de sommeil profond (II) au mode actif (1).

9. Système selon l'une quelconque des revendications précédentes,
**caractérisé en ce que**
le dispositif de communication (10) est réalisé pour la communication avec l'appareil externe (100) sous la forme d'un appareil de communication mobile (100), de préférence un appareil de téléphonie mobile, de préférence des smartphones, un élément de communication (10.2) du dispositif de communication (10) étant réalisé pour la réception d'énergie sans contact, en particulier inductive, d'une unité de communication (100.1), en particulier d'une unité NFC active (100.1), de l'appareil (100) pour l'alimentation en énergie (eE) externe au véhicule.

10. Système selon l'une quelconque des revendications précédentes,
**caractérisé en ce que**
le dispositif de communication (10) est réalisé, en particulier uniquement en mode actif (I) ou aussi bien en mode actif (I) qu'en mode de sommeil profond (II) lorsque l'alimentation en énergie (eE) externe au véhicule est établie, pour effectuer une authentification de l'appareil externe (100) à l'aide de la transmission de données (D) et/ou **en ce que** le dispositif de communication (10) est réalisé dans le mode actif (I) pour émettre activement de manière répétée, de préférence au maximum à un intervalle de temps de 100 ms ou 200 ms ou 1 s ou 10 s, un signal de communication pour le couplage (K) avec l'appareil externe (100).

11. Système selon l'une quelconque des revendications précédentes,
**caractérisé en ce que**
l'électronique du véhicule (30) est prévue comme au moins un appareil de commande (30) et/ou un système de sécurité du véhicule (1), et présente une liaison de données sans fil ou par câble avec le dispositif de communication (10), une communication entre le dispositif de communication (10) et l'électronique du véhicule (30) pouvant être réalisée au moyen de la liaison de données par l'établissement de l'alimentation en énergie (eE) externe au véhicule en mode de sommeil profond (II).

12. Système selon l'une quelconque des revendications précédentes,
**caractérisé en ce que**
le mode de sommeil profond (II) est réalisé comme un mode de transport pour un transport de longue durée du véhicule (1).

13. Procédé pour faire fonctionner au moins un composant d'un véhicule (1) en économisant de l'énergie,
où les étapes suivantes sont effectuées :
a) désactiver une alimentation en énergie (iE) interne au véhicule pour ledit au moins un composant afin de passer à un mode de sommeil profond (II),
b) activer l'alimentation en énergie interne au véhicule (iE) pour ledit au moins un composant lorsqu'une alimentation en énergie externe au véhicule (eE) est fournie à un dispositif de communication (10) selon l'une des revendications précédentes du véhicule (1), afin de passer à un mode actif (I).

14. Procédé selon l'une quelconque des revendications précédentes,
**caractérisé en ce que**
selon l'étape b), l'alimentation en énergie (eE) externe au véhicule est mise à disposition sur le dispositif de communication (10) par le fait qu'un couplage (K), en particulier inductif, du dispositif de communication (10) est effectué avec un appareil externe (100) pour la transmission d'énergie, la transmission d'énergie étant adaptée à une activation et/ou à un fonctionnement d'un dispositif de commutation électronique (40), en particulier du dispositif de communication (10), par lequel le passage dans le mode actif (I) est initié.

15. Procédé selon l'une quelconque des revendications précédentes,
**caractérisé en ce que**
un système selon l'une des revendications précédentes est exploité.
